# EUROPÄISCHE PATENTSCHRIFT

(11) **EP 0 925 464 B1**
(45) Veröffentlichungstag und Bekanntmachung des Hinweises auf die Patenterteilung: **22.05.2002**
(21) Anmeldenummer: 97943834.8
(22) Anmeldetag: 05.09.1997
(51) Int. Cl.: F16K 1/08, F16K 27/02

(54) **HUBVENTIL KURZER BAUART**
SHORT LIFT VALVE
VANNE A CLAPET DE TYPE COURT

(30) Priorität: 12.09.1996 DE 19637315; 02.08.1997 DE 19733544
(43) Veröffentlichungstag der Anmeldung: 30.06.1999
(73) Patentinhaber: KSB Aktiengesellschaft, 67227 Frankenthal (DE)
(72) Erfinder: ILLY, Alois, D-67117 Limburgerhof (DE); RUCKERT, Heinz-Jürgen, D-67259 Gro niedesheim (DE)
(86) Internationale Anmeldenummer: EP9704822
(87) Internationale Veröffentlichungsnummer: WO9811368

(56) Entgegenhaltungen:
- EP-A- 0 473 119
- WO-A-90/08274
- DE-A- 2 048 580
- DE-A- 2 120 808
- DE-A- 2 311 865
- DE-A- 2 825 503
- DE-U- 7 121 329
- GB-A- 1 359 755
- US-A- 2 891 763

## Beschreibung

Die Erfindung betrifft ein Hubventil gemäß dem Oberbegriff des Anspruches 1.

Hubventile werden in größeren Anlagen fast ausschließlich mit Flanschgehäuse verwendet. Bei den Flanschgehäusen sind die Anschlußseiten der Gehäuse mit vorstehenden Flanschscheiben versehen, die eine Dichtfläche aufweisen und mit entsprechenden an den anzuschließenden Rohrleitungselementen befindlichen Gegenflanschen zusammenwirken. Zwischen den Flanschen sind im Bereich der Dichtflächen Dichtungselemente angeordnet, wobei die Flanschscheiben durchdringende Schraubelemente die notwendigen Vorspannkräfte für eine dichtende Verbindung erzeugen. Um eine Zugänglichkeit zu den Schraubelementen zu gewährleisten, sind die Flanschscheiben freistehend am Hubventilgehäuse angeordnet. Der wesentliche Vorteil solcher Hubventile mit Flanschelementen besteht auch darin, daß im Bedarfsfall eine leichte Auswechselbarkeit gegeben ist. Durch Lösen der Schraubelemente kann das Hubventil einfach zwischen den Flanschen der angrenzenden Rohrleitungen herausgezogen werden und in gleicher Weise wieder zwischen die Flansche eingebaut und abgedichtet werden.

Um einen Anlagenbauer für die verschiedenen Anwendungsfälle mit den jeweils geeigneten Armaturen auszurüsten, gibt es weitere Gehäusebauarten. Bei Muffenventilen sind in die Muffen Rohrleitungsenden eingeschraubt oder eingelötet. Bei anderen Ventilbauarten sind die Anschlüsse als Schweißenden ausgebildet, um mit zugehörigen Rohrleitungsenden flüssigkeitsdicht verschweißt zu werden. Der Aufwand beim Einbau und Ausbau solcher Ventile ist erheblich größer. Diese verschiedenen Bauarten erfordern aufgrund der unterschiedlichen Baureihen einen hohen logistischen Aufwand sowohl beim Hersteller als auch beim Kunden.

Die GB-A 1 359 755 zeigt eine Hubventilbauart, mit der sich bei verringertem Materialaufwand und verringertem Bearbeitungsaufwand sowie einfacher Konstruktion die Kosten senken lassen sollen. Zu diesem Zweck wird ein Ventil vorgeschlagen, in dessen rohrförmigem Gehäuse ein zylindrischer Durchgang vorgesehen ist. Dieser Durchgang dient zur Aufnahme eines auswechselbaren zylindrischen Einsatzes, der an einer Schulter innerhalb des rohrförmigen Gehäuses anliegt. Der Einsatz enthält Strömungsführungswege für ein abzusperrendes Fluid sowie einen Ventilsitz und benötigt Positionierelemente, mit deren Hilfe seine Lage innerhalb des Gehäuses exakt ausgerichtet und in dieser Position gehalten werden kann. In entsprechender Weise ist in dem äußeren zylinderförmigen Gehäuse der Armatur eine Haube angeordnet, in der ein auswechselbarer Einsatz befestigt ist, der die Betätigungselemente einer Ventilspindel aufnimmt. Diese Lösung ist sowohl für Armaturengehäuse geeignet, die zwischen Flansche eingeklemmt werden, als auch für mit Flanschscheiben ausgerüstete Gehäuse. Gegenüber einer herkömmlichen Armatur ist diese Konstruktion jedoch erheblich kostenintensiver, da aufgrund des kompliziert zu fertigenden Gehäuses sowie des zusätzlichen Einsatzes der Bearbeitungsaufwand gegenüber gegossenen Armaturengehäusen wesentlich größer ist. Zudem entstehen durch die spanabhebende Bearbeitung der Einsätze gravierende Materialverluste, durch die Einsätze wiederum zusätzlich abzudichtende Verbindungsstellen, bei denen unter Umständen Korrosionsprobleme entstehen können. Weiterhin weist dieses Ventil eine verhältnismäßig lange Baulänge auf. Zum Einklemmen werden daher lange Schraubenbolzen benötigt. Diese verursachen deutliche Handling-Nachteile bei der Handhabung, da zum Aus- und Einbau der Armatur viel Platz benötigt wird, der in vielen Einbausituationen selten zur Verfügung steht.

Bestehende Normen definieren die Baulängen der Hubventile. Im Prinzip besteht ein Hubventil aus einem Gehäusebereich, der ein beweglich angeordnetes Verschlußelement enthält und in einer Trennwand einen zugehörigen Ventilsitz aufweist. Beiderseits dieses Gehäusebereiches sind mit Hilfe von Übergängen Flanschscheiben angeordnet. Ein durch eine Rohrleitung einem Hubventil geradlinig zuströmendes Medium wird nach Passieren des ersten Flansches im Übergangsbereich umgelenkt. um einen Ventilsitz mit zugehörigem Verschlußelement zu passieren und von einem gegenüberliegenden Übergangsbereich des Gehäuses wieder in Achsrichtung zur weiterführenden Rohrleitung geleitet zu werden. Ein solcher wellenförmiger Weg durch ein Hubventil mit senkrecht angeordneter Spindel verlängert zwangsläufig die Baulänge des Ventilgehäuses und verursacht Strömungsverluste, weshalb Hubventile gewöhnlich einen hohen Strömungsbeiwert ζ aufweisen. Dieser liegt üblicherweise in der Größenordnung von etwa 4.

Um für Hubventile günstigere Strömungsbeiwerte zu erhalten, wurden unterschiedliche Bauarten entwickelt. Eine davon sind die sogenannten Schrägsitzventile, bei denen zwischen den Anschlußflanschen ein möglichst geradlinig'er Strömungsweg gegeben ist. in den ein schräg dazu angeordnetes Verschlußelement eintaucht. Der Nachteil einer solchen Bauart besteht in dem schrägen Verlauf der Armaturenspindel. Je nach Einbaulage kann ein solches Hubventil in der Bedienung ungünstiger sein, ist schlechter zu isolieren und weist eine große Baulänge auf.

Ein Hubventil mit geringen Strömungsverlusten, einem günstigen ζ-Wert von etwa 1,2 und kürzerer Baulänge stellt die KSB-Entwicklung BOA-Compact dar, wodurch gegenüber den traditionellen Hubventilen mjt senkrecht zur Rohrleitung angeordneter Ventilspindel eine Baulängenverkürzung möglich wurde. Für die auf dem Markt befindlichen Ausführungen in Flanschbauart sind jeweils unterschiedliche Baureihen für die verschiedenen Nenndruckstufen erforderlich. Dies erfordert einen hohen logistischen Aufwand bei der Herstellung, Lagerung und Montage.

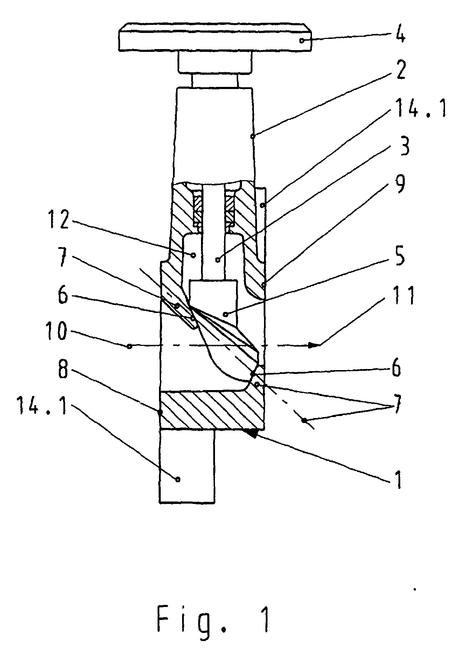

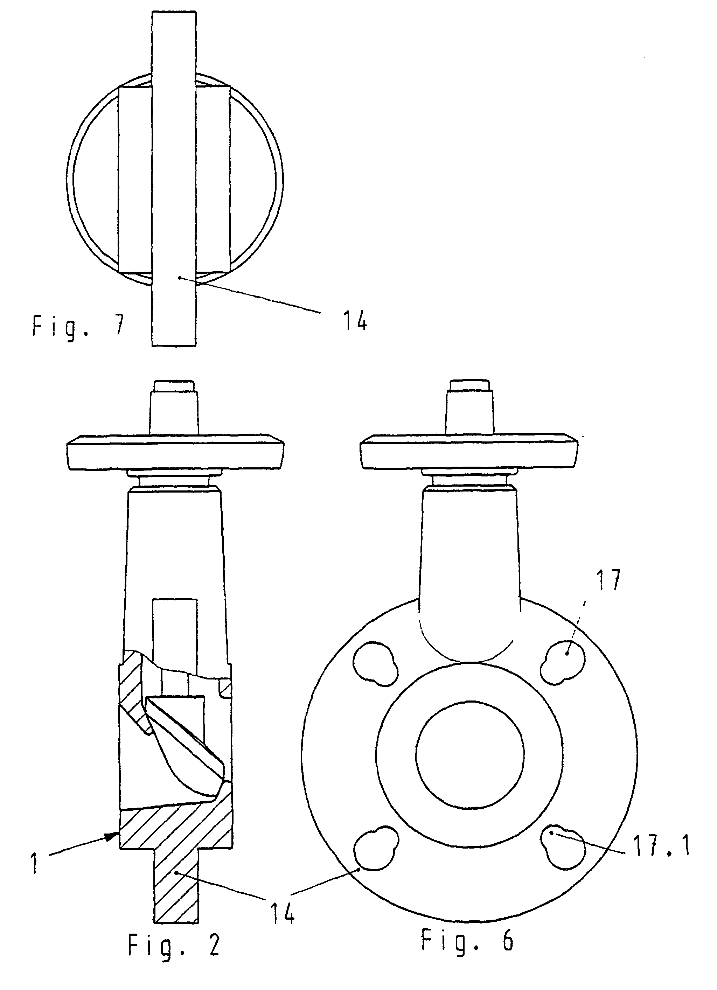

In der DE-A 20 48 580 ist eine gegenüber korrosiven Chemikalien beständige Ventilbauart in zwei verschiedenen Baulängen gezeigt. Das Hubventil ist unter Verwendung von genormten Halbzeugen aus Spezialmetallen in einer Gemischtbauweise ausgeführt, um die hohen Kosten für die erforderlichen Spezialwerkstoffe zu reduzieren. Dazu zeigt die Fig. 1 eine reine Schweißkonstruktion. während die Fig. 5 eine kurze Ausführungsform des Hubventils zeigt. in der ein aus Metall oder Kunststoff bestehenden gegossenes äußeres Gehäuses aus einem billigen Material Verwendung findet. Dieses Außengehäuse ist mit einem korrosionsbeständigen Innengehäuse versehen. In seinen Abmessungen entspricht das Innengehäuse mit seinen Verschlußteilen sowie den damit zusammenwirkenden Funktionselementen den entsprechenden Teilen der Gehäusebauform nach Fig. 1. Somit können bei zwei verschiedenen Bauformen die Herstellkosten der aus Spezialmetallen bestehenden Teile aufgrund einer größeren Anzahl von gleichen Teilen gesenkt werden.

Ein runder massiver Ventilkegel. der in eine elliptische Öffnung eines schräg'im Gehäuse angeordneten Ventilsitzes gepreßt wird, soll bei jedem beliebigen Abnutzungszustand einen dichten Abschluß am Rand einer den Ventilsitz bildenden elliptischen Öffnung aufweisen. Voraussetzung dafür ist eine drehbare Anordnung des massiven Ventilkegels über seinen Hubbereich, um jeweils an anderen Teilen der Sitzfläche des Ventilkegels zur Anlage zu gelangen.

Die in Fig. 5 der DE-A-20 48 580 gezeigte kurze Ventilbauart ist nur in Verbindung mit 4-Loch-Flanschen verwendbar. Bei größeren Flanschen bzw. beim Einsatz in Rohrleitungssystemen mit höheren Drücken, die den Einsatz von Flanschen mit mehr als 4 Schraubenlöchern erfordern, ist die gezeigte Einklemmbauart nicht mehr einsetzbar. Denn die Flanschschrauben, mit deren Hilfe die Armatur zwischen zwei Flansche gehalten ist, können aufgrund der im Gehäuse befindlichen, senkrecht zur Durchflußrichtung verlaufenden Aufnahmebohrung für den runden Ventilkegel, im Bereich der Ventilspindel nicht am Gehäuse vorbei geführt werden. Die auf den ersten Anschein hin kurz wirkende Baulänge des Hubventils der Fig. 5 ist um fast 60% größer als die entsprechende Nennweite.

Der Erfindung liegt das Problem zugrunde, ein den vorgenannten Aufwand reduzierendes und einen vielseitigen Anwendungsbereich aufweisendes Hubventil mit geringen Strömungsverlusten zu entwickeln. Die Lösung dieses Problems sieht ein Hubventil mit den Merkmalen des Anspruches 1 vor. Die Vorteile dieser Bauart sind vielfältig.

Das gesamte Hubventil wird erheblich kürzer, leichter und bietet deshalb eine wesentlich bequemere Montagemöglichkeit. Das Hubventil kann in einfachster Weise zwischen die Flansche von anzuschließenden Rohrleitungen eingeklemmt werden. Die üblicherweise an den Gehäusen von Hubventilen angebrachten Flansche zur Verbindung mit Gegenflanschen einer Rohrleitung sind für den Einbau nicht mehr erforderlich. Ebenso entfallen diejenigen Gehäuseteile, die eine Verbindung mit dem Ventilsitzbereich und den Flanschen herstellen. Stattdessen sind an dem lediglich das Verschlußelement umhüllenden Gehäuse nur Dichtflächen angeordnet. Diese, bei Verwendung von Dichtungen auch unter dem Begriff Dichtleisten bekannten Dichtflächen, sind direkt in den das Verschtußelement und seinen Hubbereich umhüllenden Gehäuseteil integriert. Die Gehäusestirnseiten bilden gleichzeitig die Dichtflächen für an das Hubventil anzuschließende Rohrleitungselemente. Die Dichtflächen liegen damit in unmittelbarer Nähe des Verschlußelementes, wodurch für Hubventile erstmals eine Baulänge erreichbar ist, deren Größenordnung etwa im Bereich der Nennweite liegt oder der Nennweite entspricht. Bezogen auf ein Rohrleitungssystem hat dies gravierende Einsparungen an Rohrleitungslängen und Materialeinsatz zur Folge. Gegenüber den üblichen Hubventilen ergeben sich im Nennweitenbereich von DN 25 bis DN 150 Baulängenverkürzungen von 135 mm bis 330 mm. Gegenüber den bereits sehr kurz bauenden Hubventilen BOA-Compact ergeben sich Baulängenverkürzungen von 10 mm bis zu 60 mm. Diese Maßnahme wirkt sich positiv auf die Verwendung unserer natürlichen Resourcen aus und hat darüberhinaus den weiteren Vorteil, daß durch das geringere Gesamtgewicht die Montage wesentlich erleichtert wird und Transportkosten verringert werden.

Die Baulänge des Hubventils wird bestimmt durch die Lage des Ventilsitzes und der daran angrenzenden Gehäusewandstärke. Durch die Anordnung des Ventilsitzes schräg zur Durchströmrichtung und zur Ventilspindel sind sowohl kegelige als auch ebene Ventilsitzgeometrien möglich. Der schräge Ventilsitz kann sowohl in einer Ebene angeordnet sein als auch über eine räumliche Krümmung verfügen. Bei Verwendung eines auf dem Ventilsitz aufliegenden Verschlußelementes sind zwischen der Gehäusewand und dem Ventilsitz Übergänge für eine Auflagefläche vorzusehen. Diese bilden dann in Verbindung mit dem Verschlußelement eine Trennwand innerhalb des Gehäuses. Es ist auch ohne weiteres möglich, in einer solchen Trennwand oder in den Übergängen einen anderen, z. B. kegeligen oder kegelförmigen Ventilsitz vorzusehen, der mit einem entsprechend geformten Verschlußelement zusammenwirkt. Der Ventilsitz oder eine den Ventilsitz aufnehmende Wandfläche bzw. Wandflächenteile verlaufen zwecks Baulängenverkürzung als eine quasi diagonale Verbindung zwischen den Gehäusestimseiten. Diese Verbindung schneidet dabei die Rohrleitungsachse beziehungsweise sie verläuft schräg zur Durchströmrichtung. Wesentlich ist eine kurze und direkte Verbindung der Gehäusestirnseiten mit dem Ventilsitz oder einem den Ventilsitz enthaltenden Gehäuseteil. Damit ist eine Verlagerung der Gehäusestirnseiten in Richtung auf das Verschlußelement hin möglich, die eine gravierende Baulängenverkürzung zur Folge hat. Gegenüber der auf die Rohrleitungsachse projizierten und in Achsrichtung meßbaren Länge des Verschlußelementes ist der in gleicher Richtung meßbare Abstand zwischen den Gehäusestirnseiten nur um 25 % bis 50 % größer. Im Vergleich mit den bisher bekannten Lösungen stellt dies einen nur geringfügig größeren Abstand dar und ermöglicht erstmals eine zwischen den Gehäusestirnseiten meßbare Baulänge des Hubventils, die vorzugsweise der jeweiligen Nennweite einer Hubventil-Größe entspricht. Dies ist im wesentlichen bedingt durch die Wandstärke des Gehäuses, der Länge des Ventilsitzes und der Größe der Übergänge vom Ventilsitz zum Gehäuse.

Die sonst bei Hubventilen übliche Trennwand besteht hier fast ausschließlich aus dem Ventilsitz für das Verschlußelement und den an den Ventilsitz angrenzenden Übergängen in die Gehausestirnseiten beziehungsweise in die umgebende Gehäusewand. Diese kurze Baulänge hat einen auch gravierenden weiteren Vorteil zur Folge. Bei der Erstellung von Gebäuden stellt die Baulänge eines Hubventils einen erheblichen Kostenfaktor dar. Gebäude müssen Räume aufweisen, in denen zentrale Verteilstationen befindlich sind, von denen aus die Steuerung der im Gebäude befindlichen Rohrleitungssysteme für Heizungs- und Klimaanlagen sowie Wasserversorgungssysteme erfolgt. In den Räumen der Verteilstationen verlaufen die Verteilleitungen der Rohrleitungssysteme üblicherweise senkrecht. Um in den senkrechten Verteilleitungen eine entsprechende Anzahl der in den üblichen Normbaulängen hergestellten, gute Drossel- und Regeleigenschaften aufweisenden Hubventile einbauen zu können, sind größere Raumhöhen erforderlich. Mit Hilfe der neuen und erheblich kürzer bauenden Hubventile sind für die Verteilstationen niedrigere Geschoßhöhen ausführbar. Dadurch können die Baukosten reduziert und der Nutzungsgrad eines Gebäudes verbessert werden.

Um einen niedrigen Widerstandsbeiwert zu erhalten, entspricht der Sitzquerschnitt des Hubventils etwa der Größenordnung des Anschlußquerschnittes der Rohrleitung und damit etwa der Nennweite. Durch eine Einschnürung des Sitzquerschnittes gegenüber dem Rohrleitungsquerschnitt wären auch kürzere Baulängen möglich, jedoch würde dies den Strömungsbeiwert ζ verschlechtem.

Nach einer weiteren Ausgestaltung der Erfindung ist das Gehäuse ringförmig ausgebildet. Eine solche Form ist sehr leicht herstellbar und kommt mit einem Minimum an Material aus. Die Stirnseiten des ringförmigen Gehäuse dienen gleichzeitig als Gehäusedichtflächen. Im Prinzip besteht das Gehäuse aus einem ringförmigen Bereich, einem schräg angeordneten Ventilsitz oder einer schräg angeordneten, den Ventilsitz enthaltenen Trennfläche. Diese kann stoff-, kraft- oder formschlüssig in dem ringförmigen Gehäusebereich angeordnet sein. In einem darüber befindlichen Bereich, üblicherweise als Gehäusehals bezeichnet, ist das Verschlußelement und die Ventilspindel angeordnet.

Gemäß einer weiteren Ausgestaltung der Erfindung ist das Gehäuse und der Gehäusehals ein- oder mehrteilig ausgebildet. Bei einteiliger Ausbildung ist es möglich, das Verschlußelement von seiten der Gehäusedichtfläche her in das Gehäuse einzuführen. Eine zwei- oder mehrteilige Ausbildung erlaubt auch eine andere Montageart, z. B. durch eine Öffnung für den Gehäusehals.

Weitere Ausgestaltungen der Erfindung, nach der eine die Hubbewegung des Verschlußelementes begrenzende Wand zu einem das Verschlußelement aufnehmenden Raum hin konkav ausgebildet ist sowie eine an der konkaven Wand anliegende Fläche des Verschlußelementes konvex ausgebildet ist, ermöglichen eine platzsparende Anordnung des Verschlußelementes innerhalb des umhüllenden Gehäuse. Die Wölbungen der Wandflächen schaffen einen weiteren konstruktiven Freiraum. Während der normalen Hubbewegung zur Öffnung des vollen Strömungsquerschnittes bewegt sich das Verschlußelement vom Ventilsitz in den Raum hinein. Durch die Wölbungen kann das Verschlußelement in dem Raum weiter nach oben wandern, ohne dabei von den den Raum begrenzenden Schraubelementen und der notwendigen Wandstärke behindert zu werden.

Nach einer weiteren Ausgestaltung der Erfindung ist das Hubventil als Einklemmventil ausgebildet. Das Hubventil kann somit in einfachster Weise und unabhängig von den zulässigen Druckstufen zwischen die Flansche von anzuschließenden Rohrleitungen eingeklemmt werden. Die an den Flanschen befindlichen Dichtflächen wirken unter Verwendung von Flachdichtungen mit den in unmittelbarer Nähe des Verschlußelementes befindlichen Gehäusestirnseiten zusammen. Und die Flansche miteinander verbindende Schraubelemente pressen die beiderseits des Gehäuses befindlichen Flansche der Rohrleitungen gegen das Gehäuse und klemmen es dazwischen fest.

Für diejenigen Anwendungsfälle, bei denen ein solches Hubventil auch als Endarmatur zum Abschluß einer Rohrleitung Verwendung finden soll, kann das Gehäuse auch als Monoflanschgehäuse ausgebildet sein. Dies ermöglicht die Bildung eines Widerlagers für Schraubelemente, die das Armaturengehäuse gegen ein Rohrleitungsende pressen.

Um die kurze Baulänge sicherzustellen sind im Bereich zwischen den Gehäusestirnseiten am Gehäuse Flansche oder Teile von Flanschen angeordnet, wobei Teile davon in einer den Ventilsitz schneidenden Ebene angeordnet sind. Bei einem äußerlich symmetrischen Gehäuseaufbau ist der Ventilsitz asymmetrisch innerhalb des Gehäuses angeordnet, wodurch die Situation entstehen kann, daß auf einer Gehäuseseite ein Flansch oder Flanschteile davon unmittelbar vor der Ventilsitzebene befindlich ist und auf der anderen Gehäuseseite die Flansche oder Flanschteile in einer dem Ventilsitz schneidenden Ebene angeordnet sind. Um bei der Befestigung eines solchen Hubventils als Endarmatur sicherzustellen, daß die Befestigungsmittet nicht über die Armatur hinausstehen, sind die Flansche oder Flanschteile mindestens um ein der Höhe eines Schraubenkopfes oder einer Mutter entsprechendes Maß gegenüber den Gehäusestirnseiten zurückversetzt angeordnet.

Das Hubventil kann auch in ein Rohrleitungssystem eingebaut werden, bei dem Klammerelemente das Gehäuse mit einer Rohrleitung verbinden. Die Gehäusestimseiten würden dann ebenfalls direkt an der Stirnseite einer Rohrleitung anliegen und je nach dem Anwendung findenden Montagesystem können mehrere oder als Gelenkteile ausgebildete Klammerelemente Verwendung finden. Zu diesem Zweck sind im Bereich der Gehäusestirnseiten am Gehäuseumfang Nuten oder Vorsprünge als Widerlager für die Klammerelemente angeordnet. Solche Verbindungstechniken sind häufig im Bereich der Lebensmittelindustrie anzutreffen.

Durch die DE-B-23 11 865 ist ein als Membranventil ausgebildetes Hubventil bekannt, welches aus einem dreiteilig aufgebauten Gehäuseunterteil besteht. Die Dreiteilung wurde vorgenommen, um kostengünstige Spritzgußteile mit annähernd gleichem Stückgewicht zu erhalten. Ein mit einem Dichtsteg versehenes Gehäusemittelteil weist räumlich verlaufende Flanschflächen auf, an die unter Zwischenschaltung einer ebenfalls räumlich angeordneten Rundschnurdichtung Flanschenden angelegt und durch Zuganker mit dem Gehäusemittelteil verbunden werden. Diese Armatur ist nur in Verbindung mit allen drei Teilen funktionsfähig.

Demgegenüber sieht eine Ausgestaltung der Erfindung vor, daß die Gehäusestirnseiten als Schnittstellen für unterschiedliche Anschlußadapter zur Rohrleitung ausgebildet sind. Und eine weitere Ausgestaltung sieht vor, daß die Anschlußadapter rohrleitungsseitig mit unterschiedlichen Anschlußformen ausgestattet sind. Hierbei kann es sich um Flansche, Schweißenden, Muffen oder dergleichen handeln. Diese Lösung bietet eine gravierende Vereinfachung bei der Verwendung eines Hubventils. Damit ergibt sich auch die Möglichkeit zum nachträglichen Einbau des Hubventils in ein bereits bestehendes Rohrleitungssystem oder in ein Rohrleitungssystem mit anderen Anschlußsystemen. Die Grundbauform stellt ein vollständig funktionsfähiges Hubventil dar, welches in einfachster Weise in die am weitesten verbreiteten Rohrleitungssysteme mit Flanschverbindungen problemlos eingebaut werden kann. Die üblicherweise Verwendung findenden Flansche ermöglichen das problemlose Einklemmen eines derartigen Hubventiles. Die Ausbildung der die Dichtflächen bildenden Gehäusestimseiten als Schnittstelle zur Anbringung von Adapter bietet den enormen Vorteil, daß mit Hilfe einfacher Adapter das Hubventil problemlos an andere Rohrverbindungssysteme angepaßt und dort eingebaut werden kann. Die Adapter sind als einfache rotationssymmetrische Bauteile gestaltet und können als Massenartikel in gußtechnischer, spanabhebender oder anderer Weise gefertigt werden. Im Bedarfsfall können sie auch kurzfristig auf Abruf hergestellt werden, so daß eine aufwendige Lagerhaltung für solche Bauteile nicht erforderlich ist. Für einen Hersteller und seine Händler genügt es, die funktionsfähige Grundarmatur zu bevorraten, um diese im Bedarfsfall mit Hilfe der einfachen Adapter für die unterschiedlichsten Anwendungsfälle einsetzbar zu gestalten.

Für die Verwendung von dem das Grundelement bildenden Hubventil sieht eine weitere Ausgestaltung der Erfindung vor, daß der ein Verschlußelement umhüllende Gehäusebereich zwischen den Gehäusestirnseiten mit ein oder mehreren radial abstehenden, Öffnungen aufweisenden Aufnahmen für Schraubelemente versehen ist. Durch die Öffnungen können die Flansche verbindende Schraubelemente hindurchgesteckt oder daran befestigt werden. Auch können die einzelnen Aufnahmen als Vorsprünge oder Flanschaugen gestaltet sein, wobei jeder Vorsprung mit ein oder mehreren Öffnungen ausgestattet ist. Eine solche Maßnahme stellt eine weitere Materialersparnis dar und ermöglicht es, ein Hubventil mit verschiedenen Flanschbauformen zu verbinden. Die Öffnungen können den verschiedenen nationalen und/oder internationalen Flanschnormen, z. B. ANSI, DIN, EN und ähnlichem entsprechen. Ebenso ist damit die Verwendung des Hubventils als Endarmatur möglich.

Nach einer anderen Ausgestaltung der Erfindung ist ein von der Ventilspindel durchdrungener Gehäuseteil mit Aufnahmen für Schraubelemente versehen. Gewöhnlich ist dies ein Gehäusehals bzw. derjenige Bereich des Hubventilgehäuses, in den während der Öffnungsbewegung ein Verschlußelement hineinbewegt wird. Bei den Aufnahmen kann es sich um Sackbohrungen handeln, die Schraubelemente aufnehmen. Diese Ausgestaltung findet Anwendung bei denjenigen Fällen, bei denen aufgrund einer engen Teilung der Flanschbohrungen die Schraubelemente seitlich nicht am Gehäusehals vorbeigeführt werden können.

Ebenso ist nach einer weiteren Ausgestaltung der Erfindung der von der Ventilspindel durchdrungene Gehäuseteil mit Materialanhäufungen für die Anordnung der Aufnahmen versehen. Gewöhnlich trifft dies nur für seitlich neben einer Ventilspindel angeordneten Aufnahmen zu. Die Anlageflächen von diesen und einander gegenüberliegenden Aufnahmen, die parallel zu den Flanschflächen der anzuschließenden Rohrleitungsflansche verlaufen, weisen zueinander einen größeren Abstand auf, als die restlichen Aufnahmen.

Eine weitere Ausgestaltung der Erfindung sieht vor, daß der Ventilsitz fast vollständig in der Trennebene zwischen der Rohrleitungsachse und dem der Ventilspindel abgewandten Bereich des Strömungsraumes angeordnet ist. Das Verschlußelement und der für die Hubbewegung des Verschlußelementes notwendige Raum, in welchen es bei der Öffnungsbewegung eintaucht, befindet sich dann immer innerhalb des Bohrbildes für die Öffnungen der Flanschverschraubungen sowie der erforderlichen Gehäusewandstärke. Im Bereich zwischen Gehäusehals und Rohrleitungsachse ist der Raum vorgesehen, in den das Verschlußelement bei der Öffnungsbewegung des Hubventils aufgenommen wird und damit nur noch geringen Einfluß auf den Strömungsbeiwert ausüben kann.

Mit der Erfindung ist ein äußerst kompaktes und strömungsgünstiges Hubventil herstellbar, welches mit seinem Gehäuse an die verschiedensten Flansche bzw. Flanschnormen anschließbar ist. Weiter kann mit einer geringeren Anzahl von Gehäusevarianten ein gleich großes Anwendungsspektrum bedient werden.

Die Erfindung ist in den Zeichnungen dargestellt und wird im folgenden näher beschrieben. Es zeigen die
- Fig. 1 - 3: verschiedene Nennweiten eines Hubventils, die
- Fig. 4 & 5: zwei weitere Ansichten der Fig. 1, die
- Fig. 6 & 7: zwei weitere Ansichten der Fig. 2, die
- Fig. 8 & 9: zwei weitere Ansichten der Fig. 3, die
- Fig. 10 & 11: einen Vergleich der Fig. 2 mit dem Stand der Technik, die
- Fig. 12: ein Hubventil mit separat gefertigtem Ventilsitz, die
- Fig. 13 & 14: zwei Ansichten des Hubventil mit Ringgehäuse, die
- Fig. 15: ein Hubventil mit verschiedenen Anschtußadaptern, die
- Fig. 16 & 17: zwei Ansichten eines Hubventils mit mehreren Aufnahmen, die
- Fig. 18 - 25: verschiedene Varianten des Hubventils, die
- Fig. 26: eine perspektivische Gehäuseansicht und die
- Fig. 27: eine Hubventilbefestigung mittel Klammem.

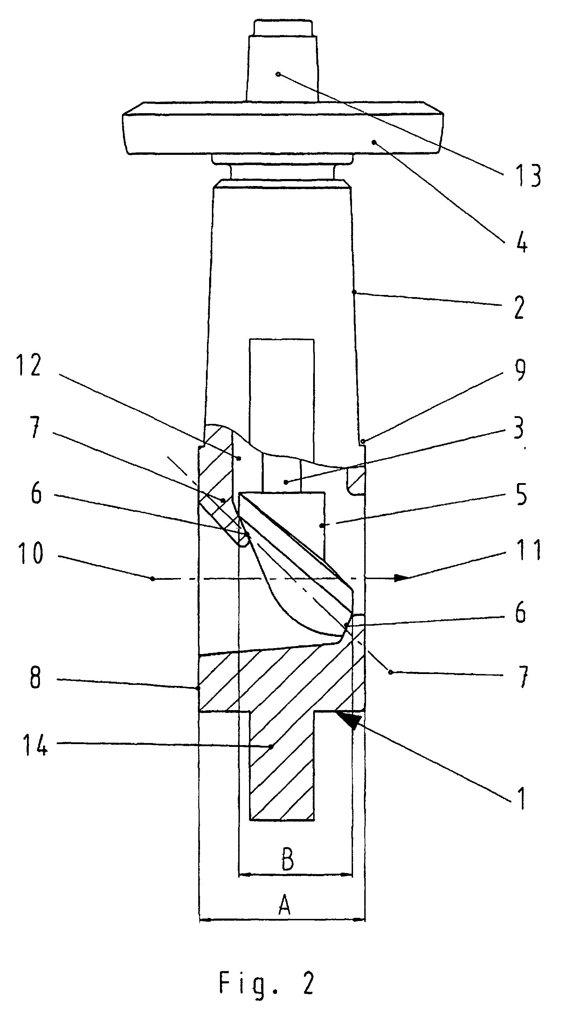

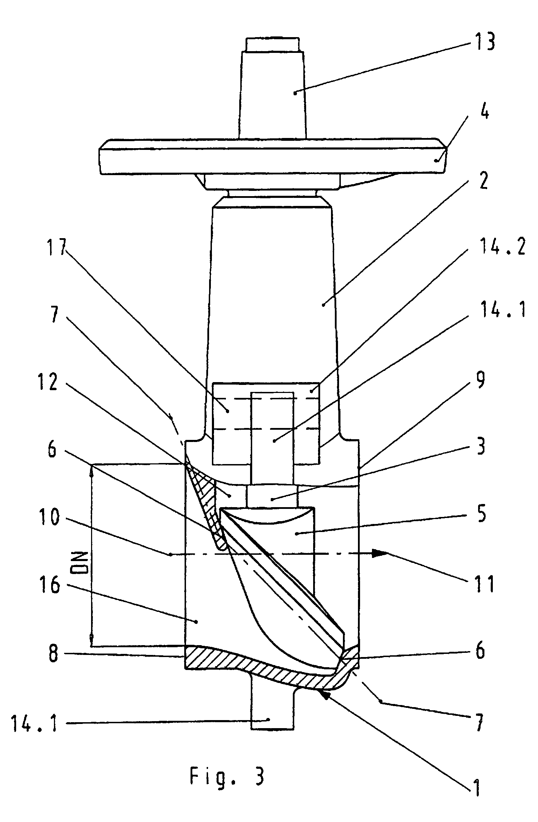

In den Fig. 1 - 3 ist das Hubventil mit drei verschiedenen Nennweiten dargestellt. Dabei entspricht die Fig. 1 einem Hubventil für einen kleinen Nennweitenbereich um DN 25, die Fig. 2 einer Nennweite im Bereich um DN 50 und die Fig. 3 einer Nennweite im Bereich um DN 100. Die Darstellungen sind teilweise geschnitten, wobei der Sitzbereich jeweils im Schnitt gezeichnet ist. In Fig. 1 verfügt das Gehäuse 1 über einen Gehäusehals 2, in dem eine steigende Ventilspindel 3 angeordnet und durch ein Handrad 4 betätigbar ist. Die Ventilspindel ist mit einem Verschlußelement 5 verbunden. Die Verbindung zwischen Ventilspindel 3 und Verschlußelement 5 sowie deren Bewegung erfolgt in bekannter Art. In der Darstellung ist das Verschlußelement 5 dichtend in einen Ventilsitz 6 eingepreßt, der Bestandteil einer Trennfläche 7 ist. Der mittlere Bereich der Trennfläche 7 ist als strichpunktierte Linie dargestellt und als eine auf der Zeichenebene stehende Ebene zu betrachten. Die Trennfläche 7 geht direkt oder indirekt von den Gehäusestimseiten 8, 9 aus und kann als eine verbindende Fläche der Gehäusestimseiten 8, 9 angesehen werden. Die Trennfläche 7 verläuft schräg zur Rohrleitungsachse 10 und schneidet diese. Die bevorzugte Durchströmrichtung ist hier mit dem Pfeil 11 markiert. Das Hubventil kann auch gegen die bevorzugte Richtung durchströmt werden. Durch Betätigung des Handrades wird das Verschlußelement 5 aus dem Ventilsitz 6 herausgehoben und wandert infolge einer hier verwendeten steigenden Spindel 3 in einen Raum 12, der hier oberhalb des Ventilsitzes 6 befindlich ist.

Durch die Ausbildung einer mit einem Ventilsitz ausgestatteten Trennwand als eine die Gehäusestirnseiten verbindende Schrägfläche ist es möglich, die Baulänge eines Hubventils drastisch zu reduzieren. Das Hubventil kann somit direkt zwischen die Flansche einer anzuschließenden Rohrleitung eingeklemmt werden und - wie in den nachfolgenden Figuren näher gezeigt ist - dazwischen gehalten werden. Die Trennwand kann dabei einen ebenen oder räumlich gekrümmten Verlauf aufweisen.

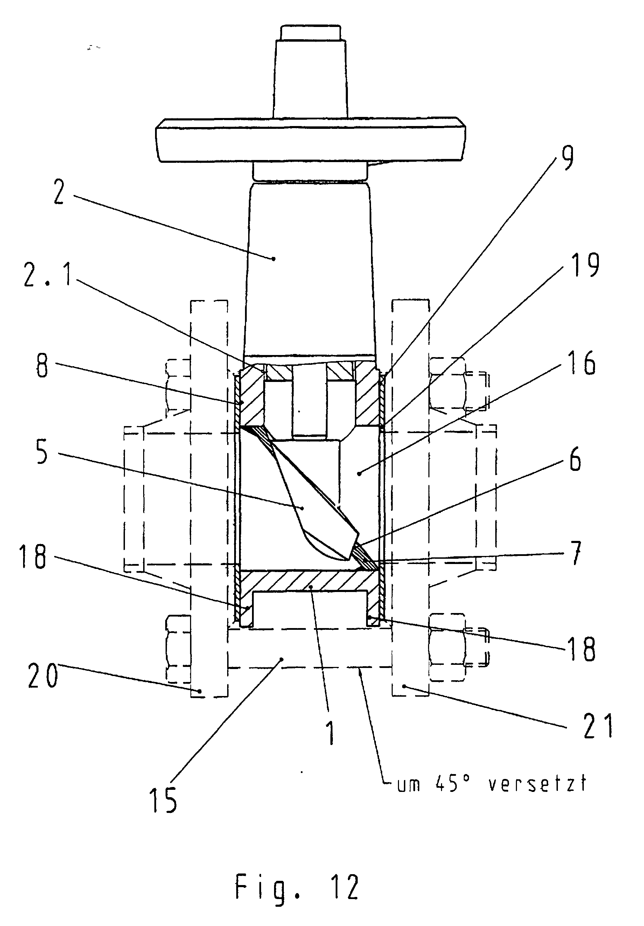

Die Fig. 2 entspricht in ihrem Aufbau der Darstellung der Fig. 1 wobei hier am Handrad 4 eine Schutzkappe 13 befestigt ist, welche eine Umhüllung für die steigende Spindel 3 darstellt. Sie kann gleichzeitig zur Anzeige der Hubstellung dienen, indem z. B. Öffnungen vorgesehen werden, die die Hubstellung der Spindel erkennen lassen. Das Gehäuse 1 zeigt hier eine nach außen radial abstehende und ringförmig ausgebildete Aufnahme 14, die zur Führung von - in Fig. 12 dargestellten - Schraubelementen 15 dient. Bei Verwendung als Endventil an einer Rohrleitung können die Schraubelemente 15 auch direkt an der Aufnahme 14 anliegen. Im Gegensatz zur Fig. 2 finden in der Fig. 1 mehrere radial vom Gehäuse 1 abstehende Aufnahmen 14.1 Verwendung, die zur Achse der Spindel 3 versetzt angeordnet sind. Diese Maßnahme ermöglicht es, daß ein Teil der Schraubenköpfe oder Muttern im Bereich innerhalb der Baulänge angeordnet werden können, um für beide Durchströmrichtungen die Verwendung als Endventil zu ermöglichen. Das in Fig. 2 eingezeichnete Maß A entspricht hier der Gesamtlänge des Hubventils bzw. dem Abstand zwischen den die Baulänge definierenden Gehäusestirnseiten 8 und 9. Das Maß B entspricht der auf die Rohrleitungsachse 10 projizierten Länge des Verschlußstückes 5. Bei der hier gezeigten Ausführungsform ist die Baulänge A des Hubventils nur geringfügig größer als die projizierte Länge B. Dies ist bedingt durch die notwendige Wandstärke, einer symmetrischen Anordnung der Ventilspindel 3 zur Baulänge A und den Übergängen zwischen der den Ventilsitz 6 aufweisenden Trennfläche 7 und Gehäusewand. Bei nicht symmetrischer Anordnung könnte die Baulänge entsprechend kürzer ausgeführt werden.

Die Darstellung in der Fig. 3 zeigt ein Hubventil für einen Nennweitenbereich um und größer DN 100. Mit DN ist die Nennweite des Hubventits bezeichnet, die etwa dem Durchmesser einer Anschlußrohrleitung entspricht, an die ein Hubventil angeschlossen wird. In dem hier gezeigten Ausführungsbeispiel weist die Trennfläche 7 durch eine Abwinklung einen räumlich gekrümmten Verlauf auf. Diese Maßnahme ergibt im Bereich größerer Nennweiten den Vorteil, daß der Ventilsitz 6 fast vollständig in einen Bereich verlagert wird, der unterhalb der Rohrleitungsachse 10 in einen der Ventilspindel 3 abgewandten Bereich des Strömungsraumes 16 des Gehäuses 1 befindlich ist. Dies hat den entscheidenden Vorteil, daß der Raum 12, der das Verschlußelement 5 bei einer Hubbewegung aufnimmt, ebenfalls zur Rohrleitungsachse 10 hin verlagert wird. Somit wird gewährleistet, daß der Strömungsraum 16 und der Raum 12 innerhalb des Bereiches befindlich ist, den die das Hubventil einklemmenden Schraubelemente einschließlich der erforderlichen Gehäusewand umschließen. Die Anzahl der Schraubelemente ist abhängig von der zulässigen Druckbelastung und der Baugröße oder Nennweite des Hubventils. Gewöhnlich finden mehr als vier Verbindungselemente Verwendung. Am Gehäuse 1 befinden sich mittig angeordnete Aufnahmen 14.1, in denen sich Öffnungen 17 zur Aufnahme von - hier nicht dargestellten - Schraubelementen befinden. Im Übergang zwischen dem Gehäusehals 2 und dem Gehäuse 1 sind als Materialanhäufung ausgebildete Aufnahmen 14.2 befindlich. Darin sind bei größeren Nennweiten, wenn infolge der vorgegebenen Abmessungen der Rohrleitungsflansche und der Größe des Gehäusehalses 2 kein Schraubelement seitlich neben dem Gehäusehals 2 direkt anbringbar ist, beispielsweise Durchgangs- und/oder Gewindelöcher vorhanden. Bei Verwendung als Endventil wirken die Anhäufungen 14.2 als Anlageflächen für Schraubelemente.

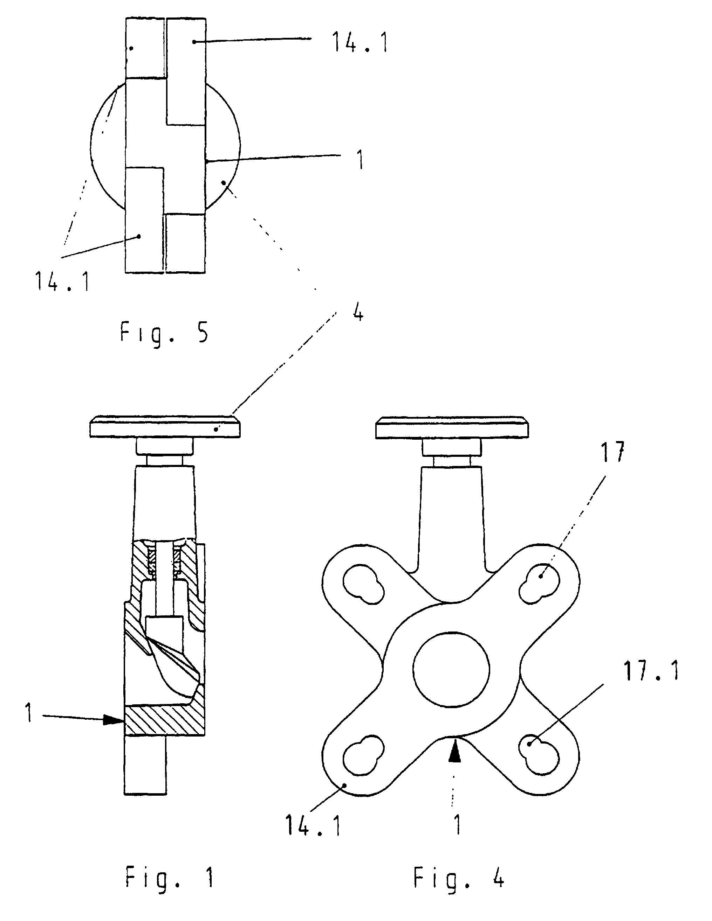

Die Fig. 4 und 5 zeigen zwei weitere Ansichten der Fig. 1. Die Fig. 4 ist eine Seitenansicht aus der entnehmbar ist, daß das Gehäuse 1 mit vier radial abstehenden Aufnahmen 14.1, die als Widerlager für Schraubelemente dienen können, ausgestattet ist. Die Schraubelemente werden in Öffnungen 17 und 17.1 der Aufnahmen 14.1 geführt. Die Öffnungen 17 und 17.1, die hier ineinander übergehen, entsprechen dem Bohrbild von anzuschließenden Flanschen unterschiedlicher Druckbelastungen und/oder Normen. Damit ist ein Hubventil in verschiedenen Technikbereichen einsetzbar. Die Anzahl von Sonderausführungen kann damit erheblich verringert werden. Diese Art der hier gezeigten Aufnahmen 14.1 findet Verwendung vorzugsweise bei kleinen Nennweiten in einem Druckbereich, der für Flansche vorgeschrieben ist, die einem Nenndruck von PN 6 und PN 10/16 standhalten müssen. Aus der Fig. 5, einer Ansicht auf die Unterseite des Hubventils, ist ersichtlich, daß die Aufnahmen 14.1 gegenüber der Spindelachse seitlich versetzt angeordnet sind. Dies ermöglicht die Unterbringung von Schraubenköpfen und Muttern im Baulängenbereich dieses Hubventils für beide Strömungsrichtungen beim Einsatz als Endventil.

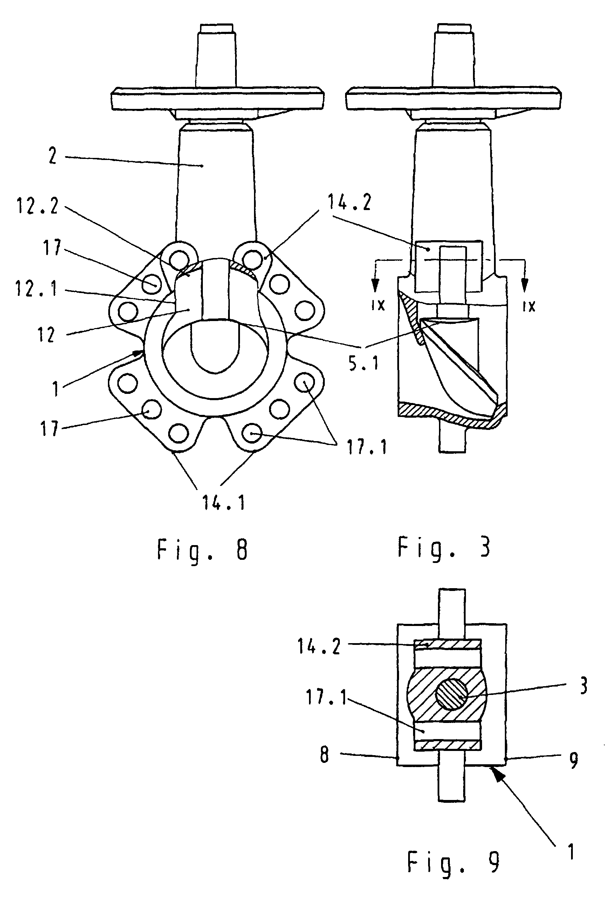

Die Fig. 6 und 7 zeigen zwei weitere Ansichten der Fig. 2, die ein Hubventil einer mittleren Baugröße aus einem Nennweitenbereich um DN 50 zeigt. Die Aufnahme 14 ist hier zentrisch am Gehäuse 1 befestigt und weist ebenfalls ineinander übergehende Öffnungen 17 und 17.1 für Schraubelemente auf. Die Aufnahme 14 dient als Widerlager für Schraubelemente 15, wenn dieses Hubventil als Endventil an einer Rohrleitung Verwendung findet. Wird das Hubventil zwischen zwei Flansche eingeklemmt, dann werden durch die Öffnungen 17 oder 17.1 Schraubelemente hindurchgesteckt, welche die Flansche dichtend an das Hubventil anpressen. Aus der Fig. 7 ist ersichtlich, daß die Aufnahme 14 zentrisch am Gehäuse angeordnet ist.

Die Fig. 8 zeigt eine Seitenansicht und die Fig. 9 einen Schnitt gemäß Linie IX - IX von der auf diesem Blatt befindlichen Fig. 3. Die Aufnahmen 14.1 weisen eine Größe auf, die die Anordnung von mehreren Öffnungen 17 und 17.1 erlaubt. Die in Fig.8 eingezeichneten mittleren Öffnungen 17 einer Aufnahme 14.1 entsprechen denjenigen Flanschbauformen, wie sie bei einem Druckbereich von PN 6 Verwendung finden. Die hierzu äußeren Öffnungen 17.1 einer Aufnahme 14.1 zeigen eine Lochanordnung, wie sie für Flansche im Nenndruckbereich von PN 16 Anwendung finden. Im Übergang zum Gehäusehals 2 sind Materialanhäufungen 14.2 vorgesehen, in denen beispielsweise reine Durchgangsöffnungen, Gewindesackbohrungen, Gewindebohrungen oder ähnliches angeordnet sein können. Damit kann beim Einsatz als Endventil eines Rohrleitungsstranges auch eine Anlagefläche für Befestigungselemente geschaffen werden.

Die Fig. 8 zeigt weiterhin einen Teilschnitt mit einer Schnittlinie 12.1, die einen Blick in den Raum 12 gestattet. Dieser Schnitt läßt erkennen, daß die den Raum 12 gegenüber dem Gehäusehals 2 begrenzende Wand 12.2 einen bogenförmigen oder räumlich gekrümmten Verlauf aufweist. In entsprechender Weise ist am Verschlußstückes 5 die der Wand 12.2 gegenüberliegende Fläche 5.1 gekrümmt ausgebildet. Bei vollständig geöffnetem Hubventil liegt die Fläche 5.1 und die Wand 12.2 aneinander. Dieses Merkmal ermöglicht bei größeren Nennweiten, daß das Verschlußstück 5 und der zugehörige Raum 12 vollständig innerhalb eines Lochkreises befindlich sind, der von den Öffnungen 17 und 17.1 sowie der Gehäusewandstärke definiert ist. Damit kann auch bei großen Nennweiten eines Hubventils eine kurze Baulänge bei gleichzeitig günstigem Widerstandsbeiwert ζ erreicht werden. Die Fläche 5.1 und die damit korrespondierende Wand 12.2 können auch einen anders gekrümmten Verlauf aufweisen, als er in Fig. 8 gezeigt ist.

Fig. 9, die einem Schnitt durch den Gehäusehals 2 der hier gezeigten Fig. 3 entspricht, zeigt ebenfalls die Materialanhäufungen 14.2 mit den Öffnungen 17.1, die im Übergang zum Gehäusehals 2 angeordnet sind.

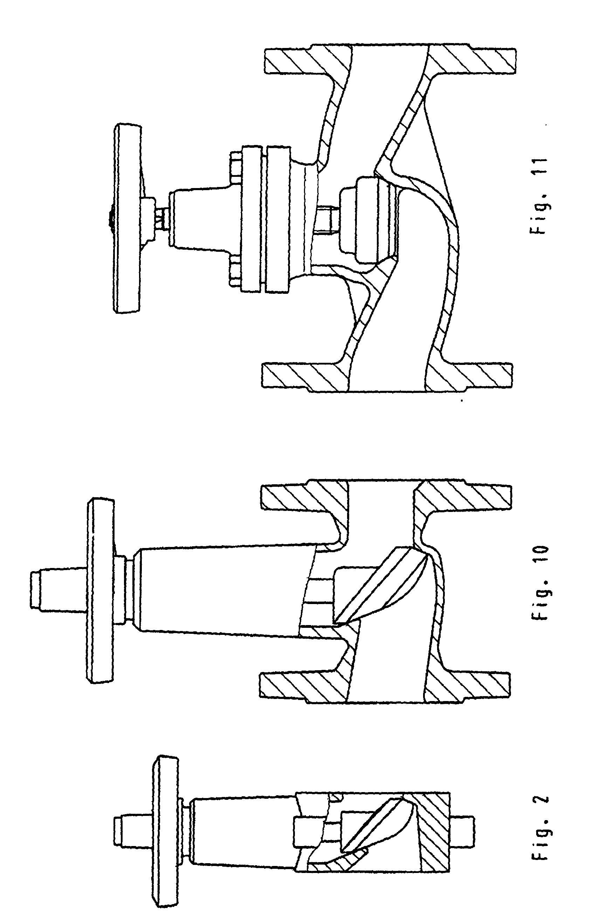

Die in den Fig. 10 und 11 gezeigten Hubventile sind in einer Gegenüberstellung mit der Lösung gemäß Fig. 2 gezeigt. Die Nennweiten sind gleich. Daraus wird deutlich, wie mit Hilfe der erfindungsgemäßen Gestaltung die Baulänge eines Hubventils gravierend verkürzt werden kann. Fig. 10 zeigt unsere Konstruktion des KSB-Hubventils BOA-Compact, während die Fig. 11 eine Baulänge eines traditionellen Hubventils zeigt. Die neue Bauform der Fig. 2 erlaubt deutliche Materialeinsparungen und gleichzeitig wird damit die Montage, der Transport und die Lagerhaltung wesentlich vereinfacht. Weiter ergeben sich für den Verwender eines solchen Hubventils Einsparungen bei den Rohrleitungslängen und als Folge davon ein geringerer Platzbedarf für ein Rohrleitungssystem.

Die Fig. 12 zeigt eine Bauart, bei der das Gehäuse 1 ringförmig ausgebildet ist und einen zylindrischen Strömungsraum 16 aufweist. Die Trennfläche 7, die mit dem Ventilsitz 6 ausgestattet ist, ist hier als separates Bauteil ausgebildet und dichtend im Gehäuse 1 befestigt. Dies kann mit Hilfe der üblichen Maßnahmen erfolgen, wobei im Ausführungsbeispiel eine Schweißverbindung gezeigt ist. Aus Gründen einer Materialersparnis weisen die Gehäusestirnseiten 8, 9 teilweise radial vorspringende Ringflächen 18 auf. Dies dient zur Bildung einer ausreichend breiten Dichtfläche für diejenigen Fälle, bei denen das Hubventil unter Zwischenlage von Flachdichtungen 19 zwischen die gestrichelt dargestellten Flansche 20, 21 einer Rohrleitung eingeklemmt werden. Desweiteren stellt es eine Montageerleichterung dar, wenn die Ringflächen 18 auf die hier - um 45° versetzt eingezeichneten - gestrichelt dargestellten Schraubelemente 15 aufliegen können. Im Montagefall werden untere Schraubelemente 15 zuerst eingesteckt, um als Auflager für das Hubventil zu dienen, welches zwischen die Flansche 20, 21 einer anzuschließenden Rohrleitung eingeschoben wird. Das Gehäuse 1 verfügt hier über einen als separates Bauteil ausgebildeten Gehäusehals 2. Dies erlaubt die Montage des Verschlußelementes 5 und gegebenenfalls auch eine Bearbeitung des Ventilsitzes 6 durch eine Öffnung 2.1.

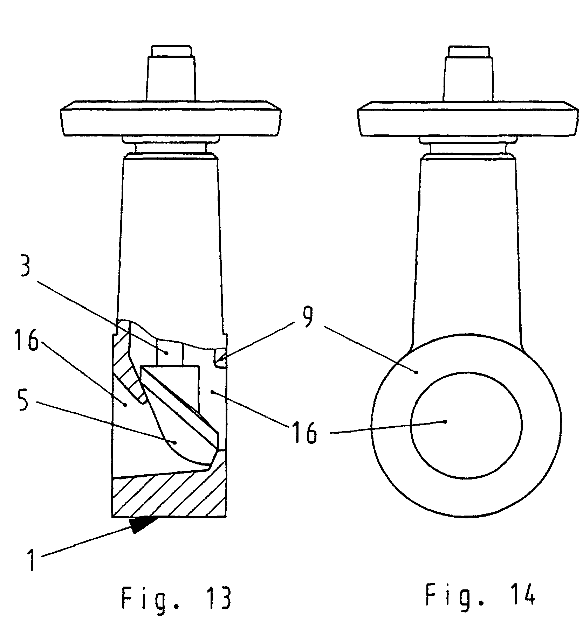

Die Fig. 13 zeigt ebenfalls eine ringförmige Bauart eines Gehäuses 1 mit dem Unterschied zur Fig. 12, daß hier das Gehäuse vollständig als ein einteiliges Gußgehäuse ausgebildet ist. Für die Montage wird dabei das Verschlußelement 5 von der Gehäusestirnseite 9 her in den Strömungsraum 16 geführt und darin mit der Ventilspindel 3 verbunden.

Wie die Fig. 14 zeigt, sind auf der Außenseite des Gehäuses 1 keine Aufnahmen angebracht, so daß dieses Hubventil ausschließlich zwischen Flansche eingeklemmt montiert wird.

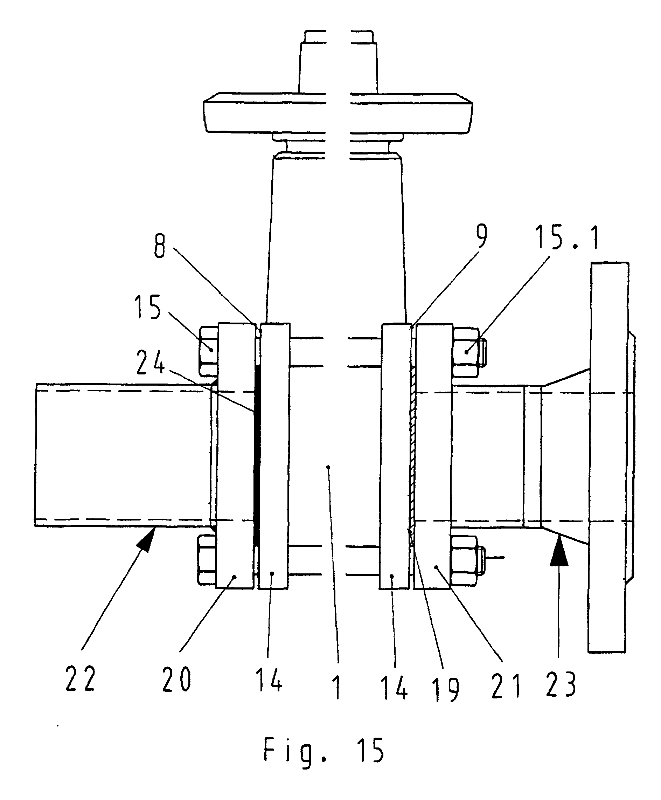

Die Fig. 15 zeigt die Verbindung des Hubventils mit zwei verschiedenen Anschlußadaptern 22, 23. Der linksseitige Anschlußadapter 22 besteht aus einem Anschlußflansch 20, der mit einem Schweißstutzen versehen ist. Bei Verwendung eines in ein Rohrleitungssystem einschweißbaren Anschlußadapters 22 findet eine Wärmesperre 24 Verwendung. Sie übernimmt in dem hier dargestellten Beispiel gleichzeitig auch die Funktion einer Dichtung. Diese ist dann zwischen der Gehäusestirnseite 8 und dem Flansch 20 des Anschlußadapters 22 montiert. Damit ergibt sich ein weiterer Vorteil bei der Montage. Das Hubventil wird an die Baustelle mit vormontiertem Anschlußadapter 22 geliefert. Aufgrund der ebenfalls vormontierten Wärmesperre kann das Hubventil direkt in eine Rohrleitung eingeschweißt werden. Eine Trennung von Hubventil und Anschlußadapter für die Dauer des Schweißvorganges ist nicht erforderlich. Die Wärmesperre verhindert eine unzulässige Erwärmung des Ventiles und ermöglicht eine schnellere Montage. Da in diesem Ausführungsbeispiel die Schraubelemente 15, 15.1 im Abstand zum Hubventil 1 angeordnet sind und keine direkte Verbindung mit der Aufnahme 14 haben, kann auf eine Wärmesperre zwischen Schraubelement 15 und Flansch 20 verzichtet werden.

Die rechte Bildhälfte der Fig. 15. zeigt die Verbindung des Hubventil 1 mit einem Anschlußadapter 23, der eine Verbindung mit einem Flansch einer Rohrleitung erlaubt. Zwischen der Stirnseite 9 und dem Flansch 21 des Anschlußadapters 23 befindet sich eine übliche Flanschdichtung 19. Die Flansche 20, 21 der hier Verwendung findenden Anschlußadapter werden durch als Zuganker wirkende Schraubelemente 15, 15.1 zusammengehalten.

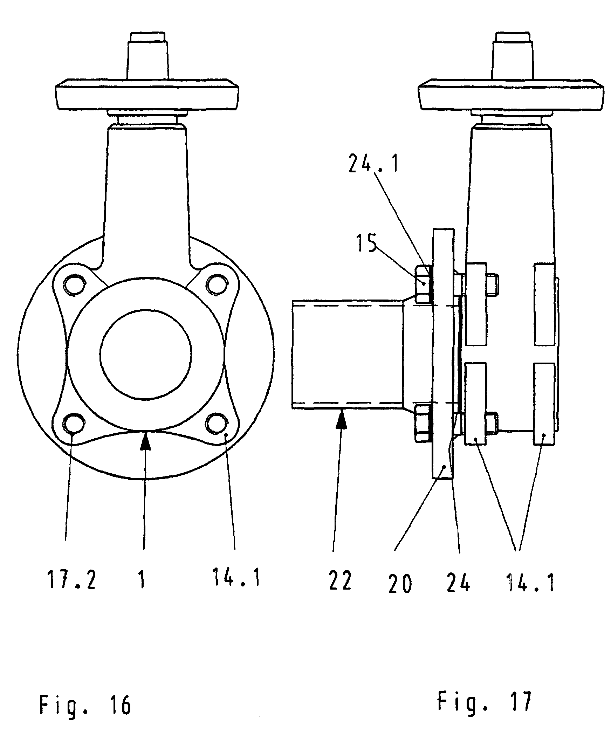

In den Fig. 16 und 17 ist ein Hubventil 1 gezeigt, daß auf seiner Außenseite mit mehreren, in zwei Ebenen angeordneten Aufnahmen 14.1 ausgestattet ist. In den Aufnahmen 14.1 sind Gewindelöcher 17.2 angeordnet, in die Schraubelemente eines Anschlußflansches einschraubbar sind. Die Fig. 17, eine Seitenansicht der Fig. 16, ist mit einem angeschraubten Anschlußadapter 22 mit Schweißstutzen versehen. Da hier der Anschlußadapter 22 durch Schraubelemente 15 mit den Aufnahmen 14.1 des Gehäuses verbunden ist, sind zwischen Flansch 20 und Schraubelement 15 zusätzliche Wärmesperren 24.1 angeordnet.

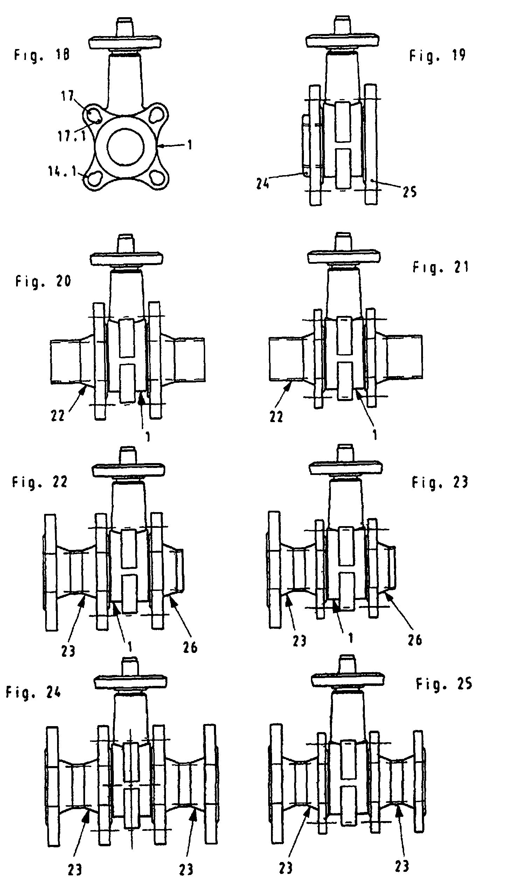

Das Blatt mit den Figuren 18 bis 25 zeigt in Form einer Übersicht Kombinationsmöglichkeiten des Hubventils mit verschiedenen Anschlußadaptern. Solche Einbauarten finden z. B. dann Verwendung, wenn bestehende Anlagen umgerüstet werden sollen. Die Adapter erlauben auch den Einbau in Rohrleitungssysteme mit unterschiedlichsten Anschlußsystemen. Die Anschlußadapter können bereits vor Anlieferung an eine Montagestelle am Hubventil vormontiert sein. Eine solche Vormontage der einfach herstellbaren Anschlußadapter ist sowohl beim Hersteller, Händler oder Anlagenbauer kostengünstig möglich. Damit kann die auf einer Baustelle teuere Montagezeit vermindert werden.

Die Fig. 18 zeigt eine Seitenansicht mit mehreren Aufnahmen 14.1, die verschiedene Öffnungen 17, 17.1 aufweisen. Die zulässige Druckbelastung des Gehäuses 1 ist jeweils für einen höheren Druckbereich ausgelegt, so daß das Hubventil problemlos in niederen Druckbereichen verwendet werden kann. Eine Auslegung beim Druckbereich PN 16 erlaubt damit die Verwendung in Druckbereichen PN 16, 10 und 6. Dementsprechend sind auch die Flanschöffnungen auf unterschiedlichen Lochkreisen, was mit den unterschiedlichen Öffnungen 17, 17.1 des Hubventils ausgeglichen werden kann.

In Fig. 19 ist als Beispiel die Verbindung des Hubventil 1 mit einem linksseitig angeordneten Anschlußadapter 24 gezeigt, der als Gewindeflansch ausgebildet ist. Damit ist es möglich, auf ein mit einem Außengewinde ausgerüstetes Rohrleitungsende einen Gewindeflansch aufzuschrauben und damit diese Rohrleitung mit dem Hubventil verbindbar zu gestalten. Auf der rechten Seite der Fig. 19 ist das Hubventil durch einen Blindflansch verschlossen. Eine solche Bauart findet Verwendung in Rohrleitungssystemen, die mit Erweiterungen ausgestattet ist und erst zu einem späteren Zeitpunkt an veränderte Bedingungen angepaßt wird. Durch Entfernen des Blindflansches 25 kann dann das Rohrleitungssystem nach dem Hubventil weiter ausgebaut werden.

Die Fig. 20 zeigt die Verbindung des Hubventils 1 mit Anschlußadaptern 22, die als Schweißstutzen ausgebildet sind. Zwischen Anschlußadapter 22 und Gehäuse 1 sind wiederum Wärmesperren angeordnet. Die hier gezeigten Anschlußadapter 22 sind für einen Nenndruckbereich 16 ausgelegt, während in der daneben befindlichen Fig. 21 die gleiche Bauart der Anschlußadapter in der Ausführung für den Nenndruckbereich PN 6 gezeigt sind.

In Fig. 22 ist der Einbau des Hubventils in ein Rohrleitungssystem des Nenndruckbereiches PN 16 dargestellt. Auf der linken Seite des Hubventils 1 befindet sich ein Flanschadapter 23, der eine Verbindung an ein mit Ftanschenden ausgestatteten Rohrleitungssystem erlaubt. Auf der rechten Seite des Hubventils befindet sich ein Anschlußadapter 26 in Form eines sogenannten Vorschweißflansches. Hier wird die Rohrleitung direkt an den Vorschweißflansch angeschweißt. Aus Sicherheitsgründen wird zwischen Hubventil 1 und Anschlußadapter 26 eine Wärmesperre vorgesehen. Die in der Fig. 23 gezeigte Ausführungsform entspricht im wesentlichen der Fig. 22 mit dem Unterschied, daß hier das Hubventil 1 als Ausgleichsstelle zwischen zwei Rohrleitungssystemen mit verschiedenen Druckbelastungen gezeigt ist. Der linksseitig angeordnete Anschlußadapter 23 dient zur Verbindung mit einem Rohrleitungssystem der höheren Druckbelastung PN 16, während der rechtsseitige Anschlußadapter 26 als Verbindungsglied für ein Rohrleitungssystem mit einer niedrigeren Druckbelastung von PN 6 ausgerüstet ist. In entsprechender Weise sind die Figuren 24 und 25 gestaltet. Hier besteht jedoch der Unterschied darin, daß die verwendeten Anschlußadapter 23 als Flanschadapter ausgebildet sind. Die Bauform gemäß Fig. 24 dient zum Einsatz in Rohrleitungssystemen mit PN 16 während die Bauform der Fig. 25 eine Verbindung zwischen zwei Rohrleitungssystemen zeigt, wobei das linksseitige System für PN 16 ausgelegt ist und das rechtsseitige für PN 6.

Mit Hilfe dieser Darstellungen wird deutlich, daß mit nur einem einzigen Hubventil der Anwendungs- und Einsatzbereich eines solchen Hubventils in gravierender und entscheidender Weise vergrößert werden kann. Diese Maßnahme stellt für alle Beteiligten eine vorteilhafte Nutzungsmöglichkeit dar.

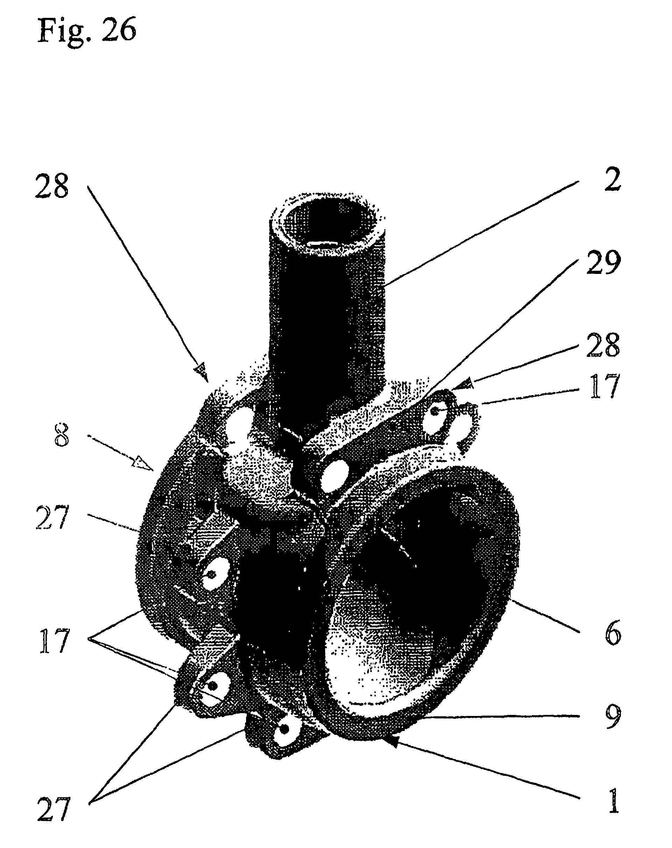

In der Fig. 26 ist ein Gehäuse 1 eines Hubventils gezeigt, welches bei größeren Nennweiten Anwendung findet, wobei es sich hierbei um Nennweiten DN = oder > 80 handelt. Bei solchen größeren Nennweiten finden Rohrleitungsflansche Anwendung, die mit mehr als vier Schraubelementen verbunden werden. Aus diesem Grund muß ein Hubventil, welches an eine solche Rohrleitung angeschlossen wird, über eine entsprechende Anzahl von Aufnahmen oder Flanschteile 27 verfügen, in denen Öffnungen 17 für - hier nicht dargestellte - Schraubelemente Anwendung finden. In der Abbildung 26 ist ein gewichtsmäßig optimiertes Gehäuse dargestellt, bei dem die Flanschteile 27 untereinander nicht verbunden sind. Wären die Flanschteile 27 miteinander stofflich verbunden, dann würden sie einen sogenannten Monoflansch abgeben. Im Bereich des Gehäusehalses finden zwei Flanschteile 28 Anwendung, wobei der Gehäusehals 2 und die in den Flanschteilen 28 befindlichen Öffnungen 17 eine Gestaltung aufweisen, die ein Hindurchstecken von Schraubelementen ermöglichen. Die Öffnungen 17 sind hierbei auf einem Kreis angeordnet, der entsprechend der jeweils Anwendung findenden Norm einem Rohrleitungsflansch entspricht, der die gleiche Nennweite aufweist. Gegenüber der Gehäusestirnseite 8 und 9 sind die Flanschteile 28 zur Mitte des Gehäuses hin versetzt angeordnet. Durch diesen in axialer Richtung stattfindenden Versatz ergibt sich ein Absatz zwischen der Anlagefläche 29 des Flanschteiles 28 und der Gehäusestirnseite 9, der so groß ist, daß ein daran anliegender Schraubenkopf oder eine Mutter eines Befestigungsmittels sowie eventuell notwendige Unterlegscheiben oder Sicherungselemente eine axiale Erstreckung aufweisen, die nicht über die Gehäusestirnseiten 8, 9 hinausragen.

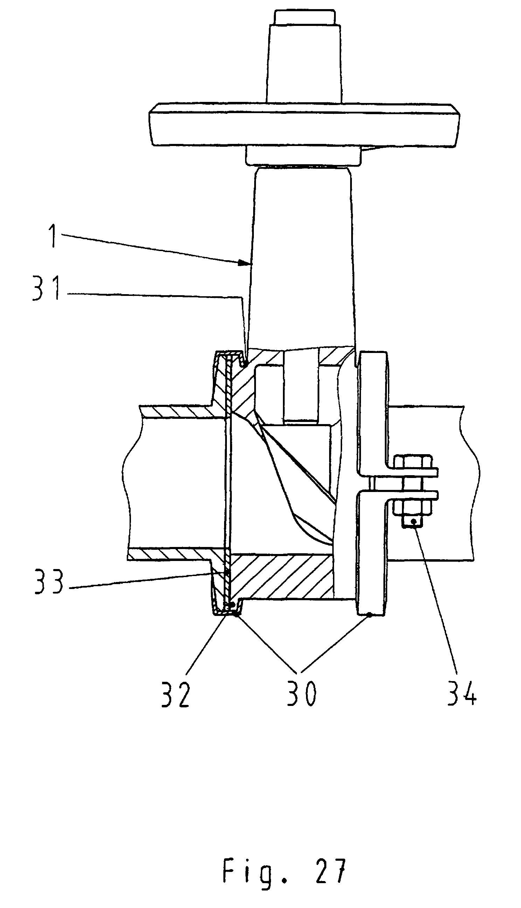

In der Fig. 27 ist eine Befestigung des Gehäuses 1 des Hubventils an einer Rohrleitung oder dergleichen mit Hilfe von Klammern 30 gezeigt. Die Klammern können als einzelne oder miteinander verbundene Elemente ausgebildet sein. Die Klammern 30 wirken mit dem Gehäuse 1 durch daran angebrachte Nuten 31 oder Vorsprünge 32 zusammen. Die Verwendung findende Klammerform bewirkt eine dichtende Anpressung des Hubventils an eine Dichtung 33 bzw. an eine Anlagenkomponente. Spannelemente 34 erzeugen in den Klammern 30 die notwendigen Kräfte für den Zusammenhalt.

## Patentansprüche

1. Hubventil, dessen Gehäuse (1) mit parallel zueinander angeordneten Gehäusestirnseiten (8, 9) zur dichtenden Anlage an Dichtflächen von Rohrleitungen und/oder Anlagenkomponenten ausgestattet ist, in einem Gehäusehals (2) eine auf einer Rohrleitungsachse (10) normal stehende Ventilspindel (3) angeordnet ist und ein mit der Ventilspindel (3) verbundenes Verschlußelement (5) mit einem Ventilsitz (6) zusammenwirkt, die Gehäusestirnseiten (8, 9) ganz oder teilweise Bestandteil des das Verschlußelement (5) und seinen Hubbereich umhüllenden Gehäusebereiches sind, der Ventilsitz (6) schräg zur Ventilspindel (3) angeordnet ist, der Ventilsitz (6) als eine verbindende Schräge im Bereich zwischen den Gehäusestirnseiten angeordnet ist, der Abstand (A) zwischen den Gehäusestirnseiten (8, 9) nur geringfügig größer als die auf die Rohrleitungsachse (10) projizierte Länge (B) des Verschlußelementes (5) ist, **dadurch gekennzeichnet, daß** die Baulänge des Hubventils, also der Abstand (A) zwischen den Gehäusestirnseiten (8, 9), durch entsprechende Konfiguration der Gehäusewandstärke, der Ventilsitzlänge und der Größe der Übergänge vom Ventilsitz zum Gehäuse, im Bereich der jeweiligen Nennweite (DN) der Hubventil-Größe liegt.

2. Hubventil nach Anspruch 1, **dadurch gekennzeichnet, daß** der Abstand (A) zwischen den Gehäusestirnseiten (8, 9) der jeweiligen Nennweite (DN) einer Hubventil-Größe entspricht oder kürzer als die jeweilige Nennweite (DN) einer Hubventil-Größe ist.

3. Hubventil nach Anspruch 1 oder 2, **dadurch gekennzeichnet, daß** das Gehäuse (1) ringförmig ausgebildet ist.

4. Hubventil nach Anspruch 1, 2 oder 3, **dadurch gekennzeichnet, daß** das Gehäuse (1) und/oder der Gehäusehals (2) ein- oder mehrteilig ausgebildet sind.

5. Hubventil nach einem der Ansprüche 1 bis 4, **dadurch gekennzeichnet, daß** eine die Hubbewegung des Verschlußelementes (5) begrenzende Wand (12.2) zu einem Raum (12) hin konkav ausgebildet ist.

6. Hubventil nach Anspruch 5, **dadurch gekennzeichnet, daß** eine an der konkaven Wand (12.2) anliegende Fläche (5.1) des Verschlußelementes (5) konvex ausgebildet ist.

7. Hubventil nach einem der Ansprüche 1 bis 6, **gekennzeichnet durch** die Ausbildung als Einklemmventil.

8. Hubventil nach einem der Ansprüche 1 bis 7, **dadurch gekennzeichnet. daß** das Gehäuse als Monoflanschgehäuse ausgebildet ist.

9. Hubventil nach einem der Ansprüche 1 bis 7, **dadurch gekennzeichnet, daß** im Bereich zwischen den Gehäusestirnseiten am Gehäuse Flansche oder Teile von Flanschen angeordnet sind. wobei Teile davon in einer den Ventilsitz schneidenden Ebene angeordnet sind.

10. Hubventil nach einem der Ansprüche 1 bis 7, **dadurch gekennzeichnet, daß** Flansche oder Flanschteile mindestens'um ein der Höhe eines Schraubenkopfes oder einer Mutter entsprechendes Maß gegenüber den Gehäusestirnseiten zurückversetzt angeordnet sind.

11. Hubventil nach einem der Ansprüche 1 bis 10, **dadurch gekennzeichnet, daß** Klammerelemente (30) das Gehäuse mit einer Rohrleitung verbinden.

12. Hubventil nach Anspruch 11, **dadurch gekennzeichnet, daß** im Bereich der Gehäusestirnseiten am Gehäuseumfang Nuten (31) oder Vorsprünge (32) als Widerlager für die Klammerelemente (30) angeordnet sind.

13. Hubventil nach einem der Ansprüche 1 bis 12, **dadurch gekennzeichnet, daß** die Gehäusestirnseiten (8, 9) als Schnittstellen zur Verbindung mit Anschlußadaptern (22, 23, 24, 25, 26) für Rohrleitungen ausgebildet sind,

14. Hubventil nach Anspruch 13, **dadurch gekennzeichnet, daß** die Anschlußadapter (22, 23, 24, 25, 26) rohrleitungsseitig mit unterschiedlichen Anschlußformen ausgestattet sind.

15. Hubventil nach einem der Ansprüche 1 bis 14, **dadurch gekennzeichnet, daß** der ein Verschlußelement (5) umhüllende Gehäusebereich zwischen den Gehäusestirnseiten (8, 9) mit ein oder mehreren, radial abstehenden Aufnahmen (14, 14.1, 14.2) versehen ist, in denen Öffnungen (17) für Schraubelemente (15, 15.1) angeordnet sind.

16. Hubventil nach einem der Ansprüche 1 bis 15, **dadurch gekennzeichnet, daß** der die Ventilspindel (3) aufnehmende Gehäusehals (2) mit Aufnahmen (14.2) für Schraubelemente (15, 15.1) versehen ist.

17. Hubventil nach Ansprüch 16, **dadurch gekennzeichnet, daß** der von der Ventilspindel (3) durchdrungene Gehäusehals (2) mit Materialanhäufungen (14.2) für die Anordnung der Aufnahmen (14.2) versehen ist.

18. Hubventil nach einem der Ansprüche 1 bis 17, **dadurch gekennzeichnet, daß** der Ventilsitz (6) fast vollständig in dem zwischen der Rohrleitungsachse (10) und dem der Ventilspindel (3) abgewandten Bereich des Strömungsraumes (16) angeordnet ist.

## Claims

1. Globe valve, the housing (1) of which is provided with housing end faces (8, 9) arranged parallel to one another for bearing tightly against sealing faces of pipelines and/or plant components, a valve stem (3) which is normal to a pipeline axis (10) is arranged in a housing neck (2), and a closure element (5) connected to the valve stem (3) interacts with a valve seat (6), the housing end faces (8, 9) are entirely or partly an integral part of the housing region encasing the closure element (5) and its lifting region, the valve seat (6) is arranged at an angle to the valve stem (3), the valve seat (6) is arranged as a connecting slope in the region between the housing end faces, the distance (A) between the housing end faces (8, 9) is only slightly larger than the length (B), projected onto the pipeline axis (10), of the closure element (5), **characterized in that** the overall length of the globe valve, that is to say the distance (A) between the housing end faces (8, 9), by appropriate configuration of the housing wall thickness, of the valve seat length and of the size of the transitions from the valve seat to the housing, is within the range of the respective nominal diameter (DN) of the globe-valve size.

2. Globe valve according to Claim 1, **characterized in that** the distance (A) between the housing end faces (8, 9) corresponds to the respective nominal diameter (DN) of a seat-valve size or is shorter than the respective nominal diameter (DN) of a globe-valve size.

3. Globe valve according to Claim 1 or 2, **characterized in that** the housing (1) is of annular design.

4. Globe valve according to Claim 1, 2 or 3, **characterized in that** the housing (1) and/or the housing neck (2) is of one-piece or multi-piece design.

5. Globe valve according to one of Claims 1 to 4, **characterized in that** a wall (12.2) limiting the lifting movement of the closure element (5) is designed to be concave towards a space (12).

6. Globe valve according to Claim 5, **characterized in that** a surface (5.1), bearing against the concave wall (12.2), of the closure element (5) is designed to be convex.

7. Globe valve according to one of Claims 1 to 6, **characterized by** the design as a wafer-type valve.

8. Globe valve according to one of Claims 1 to 7, **characterized in that** the housing is designed as a monoflange housing.

9. Globe valve according to one of claims 1 to 7, **characterized in that** flanges or parts of flanges are arranged on the housing in the region between the housing end faces, parts of these flanges being arranged in a plane intersecting the valve seat.

10. Globe valve according to one of Claims 1 to 7, **characterized in that** flanges or flange parts are arranged so as to be set back relative to the housing end faces at least by a dimension corresponding to the height of a screw head or a nut.

11. Globe valve according to one of Claims 1 to 10, **characterized in that** clamp elements (30) connect the housing to a pipeline.

12. Globe valve according to Claim 11, **characterized in that** grooves (31) or projections (32) are arranged as abutments for the clamp elements (30) in the region of the housing end faces.

13. Globe valve according to one of Claims 1 to 12, **characterized in that** the housing end faces (8, 9) are designed as interfaces for connecting to connecting adapters (22, 23, 24, 25, 26) for pipelines.

14. Globe valve according to Claim 13, **characterized in that** the connecting adapters (22, 23, 24, 25, 26) are provided on the pipeline side with different connecting forms.

15. Globe valve according to one of Claims 1 to 14, **characterized in that** the housing region encasing a closure element (5), between the housing end faces (8, 9), is provided with one or more radially projecting locators (14, 14.1, 14.2), in which openings (17) for screw elements (15, 15.1) are arranged.

16. Globe valve according to one of Claims 1 to 15, **characterized in that** the housing neck (2) accommodating the valve stem (3) is provided with locators (14.2) for screw elements (15, 15.1).

17. Globe valve according to Claim 16, **characterized in that** the housing neck (2), through which the valve stem (3) passes, is provided with built-up portions (14.2) for the arrangement of the locators (14.2).

18. Globe valve according to one of Claims 1 to 17, **characterized in that** the valve seat (6) is arranged almost entirely in the parting plane between the pipeline axis (10) and that region of the flow space (16) which is remote from the valve stem (3).

## Revendications

1. Vanne à clapet, dont le corps (1) est muni de faces frontales de corps (8, 9) disposées parallèlement l'une à l'autre pour l'application étanche contre des faces d'étanchéité de conduites tubulaires et/ou de composants d'application, une tige de clapet (3), se tenant perpendiculairement à un axe de la conduite tubulaire (10), étant disposée dans un col du corps (2) et un élément de verrouillage (5) connecté à la tige de clapet (3) coopérant avec un siège de clapet (6), les faces frontales du corps (8, 9) constituant une partie intégrale ou partielle de la zone du corps entourant l'élément de verrouillage (5) et sa zone de levage, le siège de clapet (6) étant disposé en biais par rapport à la tige de clapet (3), le siège de clapet (6) étant disposé sous la forme d'un biseau de raccord dans la zone entre les faces frontales du corps, la distance (A) entre les faces frontales du corps (8, 9) n'étant que légèrement plus grande que la longueur (B) de l'élément de verrouillage (5) projetée sur l'axe (10) de la conduite tubulaire, **caractérisée en ce que** la longueur de montage de la vanne à clapet, c'est-à-dire la distance (A) entre les faces frontales du corps (8, 9), est de l'ordre du diamètre nominal respectif (DN) de la dimension de la vanne à clapet, par une configuration correspondante de l'épaisseur de la paroi du corps, de la longueur du siège de clapet et de la dimension des transitions du siège de clapet au corps.

2. Vanne à clapet selon la revendication 1, **caractérisée en ce que** la distance (A) entre les faces frontales du corps (8, 9) correspond au diamètre nominal respectif (DN) d'une dimension de vanne à clapet ou est plus courte que le diamètre nominal respectif (DN) d'une dimension de vanne à clapet.

3. Vanne à clapet selon la revendication 1 ou 2, **caractérisée en ce que** le corps (1) est réalisé avec une forme annulaire.

4. Vanne à clapet selon la revendication 1, 2 ou 3, **caractérisée en ce que** le corps (1) et/ou le col du corps (2) sont réalisés en une ou plusieurs parties.

5. Vanne à clapet selon l'une quelconque des revendications 1 à 4, **caractérisée en ce qu'**une paroi (12.2) limitant le mouvement de levée de l'élément de verrouillage (5) est réalisée avec une forme concave vers une chambre (12).

6. Vanne à clapet selon la revendication 5, **caractérisée en ce qu'**une face (5:1) de l'élément de verrouillage (5) appliquée contre la paroi concave (12.2) est réalisée avec une forme convexe.

7. Vanne à clapet selon l'une quelconque des revendications 1 à 6, **caractérisée par** la réalisation en tant que vanne de serrage.

8. Vanne à clapet selon l'une quelconque des revendications 1 à 7, **caractérisée en ce que** le corps est réalisé en tant que corps à une seule bride.

9. Vanne à clapet selon l'une quelconque des revendications 1 à 7, **caractérisée en ce que** des brides ou des parties de brides sont disposées sur le corps dans la zone entre les faces frontales du corps, les parties de ces brides étant disposées dans un plan coupant le siège de clapet.

10. Vanne à clapet selon l'une quelconque des revendications 1 à 7, **caractérisée en ce que** des brides ou des parties de brides sont disposées en retrait en face des faces frontales du corps d'au moins une dimension correspondant à la hauteur d'une tête de vis ou d'un écrou.

11. Vanne à clapet selon l'une quelconque des revendications 1 à 10, **caractérisée en ce que** des éléments de serrage (30) connectent le corps à une conduite tubulaire.

12. Vanne à clapet selon la revendication 11, **caractérisée en ce que** dans la zone des faces frontales du corps, sur la périphérie du corps, des rainures (31) ou des saillies (32) sont disposées en tant que butées pour les éléments de serrage (30).

13. Vanne à clapet selon l'une quelconque des revendications 1 à 12, **caractérisée en ce que** les faces frontales du corps (8, 9) sont réalisées en tant que zones d'interface pour la connexion à des adaptateurs de raccordement (22, 23, 24, 25, 26) pour des conduites tubulaires.

14. Vanne à clapet selon la revendication 13, **caractérisée en ce que** les adaptateurs de raccordement (22, 23, 24, 25, 26) sont munis du côté des conduites tubulaires de formes de raccordement différentes.

15. Vanne à clapet selon l'une quelconque des revendications 1 à 14, **caractérisée en ce que** la zone du corps entourant un élément de verrouillage (5) entre les faces frontales du corps (8, 9) est pourvue d'un ou de plusieurs logements saillant radialement (14, 14.1, 14.2), dans lesquels des ouvertures (17) pour des éléments de vissage (15, 15.1) sont prévues.

16. Vanne à clapet selon l'une quelconque des revendications 1 à 15, **caractérisée en ce que** le col du corps (2) recevant la tige de clapet (3) est pourvu de logements (14.2) pour des éléments de vissage (15, 15.1).

17. Vanne à clapet selon la revendication 16, **caractérisée en ce que** le col du corps (2) traversé par la tige de clapet (3) est pourvu d'accumulations de matière (14.2) pour l'agencement des logements (14.2).

18. Vanne à clapet selon l'une quelconque des revendications 1 à 17, **caractérisée en ce que** le siège de clapet (6) est disposé presque complètement dans la zone de l'espace d'écoulement (16) opposée à l'axe de la conduite tubulaire (10) et à la tige de clapet (3).
